(19) Europäisches Patentamt
European Patent Office
Office européen des brevets

(11) **EP 0 742 242 B1**

(12) **EUROPEAN PATENT SPECIFICATION**

(45) Date of publication and mention
of the grant of the patent:
**25.08.1999 Bulletin 1999/34**

(51) Int Cl.⁶: **C08G 67/02**

(21) Application number: **96201274.6**

(22) Date of filing: **09.05.1996**

(54) **Process for the copolymerization of carbon monoxide with an olefinically unsaturated compound**

Verfahren zur Copolymerisation von Kohlenmonoxid mit einer olefinisch ungesättigten Verbindung

Procédé pour la copolymerisation de monoxyde de carbone avec un composé à insaturation oléfine

(84) Designated Contracting States:
**BE DE FR GB IT NL**

(30) Priority: **11.05.1995 EP 95201239**

(43) Date of publication of application:
**13.11.1996 Bulletin 1996/46**

(73) Proprietor: **SHELL INTERNATIONALE RESEARCH MAATSCHAPPIJ B.V.**
**2596 HR Den Haag (NL)**

(72) Inventors:
- **Baardman, Frank**
  **1031 CM Amsterdam (NL)**
- **Jubb, Jayne**
  **1031 CM Amsterdam (NL)**
- **Scheerman, Pieter**
  **1031 CM Amsterdam (NL)**
- **Wijngaarden, Rudolf Jacobus**
  **1031 CM Amsterdam (NL)**

(56) References cited:
**EP-A- 0 121 965**      **EP-A- 0 570 055**
**EP-A- 0 619 335**

## Description

This invention relates to a process for the copolymerization of carbon monoxide with an olefinically unsaturated compound.

EP-A-619335 discloses a process for the copolymerization of carbon monoxide with an olefinically unsaturated compound which comprises contacting the monomers with a catalyst composition based on a Group VIII metal and a boron hydrocarbyl compound. This process is suitable for preparing linear copolymers of carbon monoxide with an olefinically unsaturated compound. The copolymers are in particular alternating copolymers or, in other words, copolymers in which the monomer units originating in carbon monoxide alternate with the monomer units originating in the olefinically unsaturated compound. The copolymerization is typically carried out in the absence of hydrogen.

The copolymers prepared by this process contain hydrocarbyl end groups which are, at least in part, originating in the boron hydrocarbyl compound used as one of the catalyst components. This is disadvantageous because it implies that at least a part of the boron hydrocarbyl compound is consumed during the copolymerization. The formation of such end groups is in particular disadvantageous when the hydrocarbyl groups in question contain hetero elements such as halogen or nitrogen. The disadvantage is then associated with environmental implications of having such hetero elements incorporated in the copolymers, e.g. when the copolymer is incinerated.

It has now surprisingly been found that a considerable reduction in the incorporation of end groups originating in the boron hydrocarbyl compound can be achieved by carrying out the copolymerization in the presence of hydrogen.

Thus, the present invention relates to a process for the copolymerization of carbon monoxide with an olefinically unsaturated compound comprising contacting the monomers in the presence of hydrogen having a pressure of at least 0.01 MPa (0.1 bar) with a catalyst composition which is based on a source of a Group VIII metal and a boron hydrocarbyl compound.

EP-A -619335 recommends to apply a large excess of the boron hydrocarbyl compound over the Group VIII metal, for example such that the molar ratio of boron/Group VIII metal is about 50 : 1. Because in the invented process the incorporation of end groups originating in the boron hydrocarbyl compound is reduced the process may advantageously be carried out using a molar ratio of boron/Group VIII metal which is lower than the value recommended in EP-A-619335, for example less than 25:1.

In the present specification and claims the term "Group VIII metal" encompasses the noble metals ruthenium, rhodium, palladium, osmium, iridium and platinum, and the iron group metals iron, cobalt and nickel.

The catalyst composition suitable for use in the process of the invention is based on a source of cations of the said metal(s). Suitable sources of cations of metals of Group VIII include salts of mineral acids, such as salts of sulphuric acid, nitric acid and phosphoric acid, and salts of sulphonic acids, such as methanesulphonic acid and para-toluenesulphonic acid. Preferred sources are salts of carboxylic acids, in particular those having up to 6 carbon atoms, such as acetic acid, propionic acid and trifluoroacetic acid. If desired, as cation source use may be made of the metals in their elemental form, or in a zero-valent state thereof, e.g. in complex form, such as complexes wherein the Group VIII metal is covalently bonded to one or two hydrocarbyl groups. These covalently bonded hydrocarbyl groups may be aliphatic or aromatic and contain typically up to 12 carbon atoms. Preferred covalently bonded hydrocarbyl groups are aliphatic groups, in particular n-alkyl groups, such as methyl and n-butyl groups.

Catalyst compositions based on a noble Group VIII metal are preferred, those based on palladium being most preferred. A preferred source of palladium is palladium (II) acetate.

In addition to a Group VIII metal the catalyst composition contains a boron hydrocarbyl compound. The boron hydrocarbyl compound is typically a hydrocarbylborane of the general formula BXYZ wherein X, Y and Z denote independently a substituted or unsubstituted hydrocarbyl group, a hydroxy group, a substituted or unsubstituted hydrocarbyloxy group or a halogen atom, on the understanding that at least one of X, Y and Z denotes a substituted or unsubstituted hydrocarbyl group. The said hydrocarbyl groups and the hydrocarbyl groups of the hydrocarbyloxy groups may be aliphatic or aromatic groups, such groups typically having up to 12 carbon atoms. Preferred hydrocarbyl groups are aryl groups which may or may not be substituted. Preferred substituents of the hydrocarbyl groups are electron withdrawing groups or atoms, such as trihalomethyl groups, nitro groups and halogen atoms. Hydrocarbyl groups of which all hydrogen atoms are replaced by substituents are included in the term "hydrocarbyl group". The hydrocarbyl groups are in particular phenyl groups, more particularly perfluorophenyl or 3,5-bis(trifluoromethyl)phenyl groups. Examples of suitable aliphatic groups are ethyl, n-butyl and n-hexyl groups. Halogen atoms X, Y or Z are preferably fluorine. Examples of hydrocarbylboranes are phenyldifluoroborane, phenylboronic acid and hexylboronic acid. It is preferred that all three groups X, Y and Z are hydrocarbyl groups. Preferred hydrocarbylboranes are triphenylborane, tris(perfluorophenyl)borane and tris[3,5-bis(trifluoromethyl)phenyl]borane.

Other suitable hydrocarbyl boron compounds are salts containing one or more borate anions per molecule, such as salts of the general formula $MeBZ^1Z^2Z^3Z^4$ wherein Me is an alkali metal, for example lithium or sodium, and $Z^1$, $Z^2$, $Z^3$ and $Z^4$ denote independently a substituted or unsubstituted hydrocarbyl group. The hydrocarbyl groups $Z^1$, $Z^2$, $Z^3$ and $Z^4$ may be of the same type and may be selected according to the same preferences as indicated above for the groups X, Y and Z. Examples are lithium tetraphenylborate and sodium tetrakis(perfluorophenyl)-borate.

The quantity of boron hydrocarbyl compound may be varied between wide limits. However, as indicated hereinbefore, it is a particular feature of this invention that the boron hydrocarbyl compound may be used in a quantity such that the molar ratio of boron to the Group VIII metal is less than 25. More in particular this ratio is in the range of 0.1-20, preferably in the range of 0.5-15, more preferably in the range of 1-10.

Applicant has experienced that during the polymerization using a catalyst composition based on a Group VIII metal and a boron hydrocarbyl compound borane the polymerization rate may decay. It is advantageous to supply a part of the boron hydrocarbyl compound during the polymerization because this improves maintaining the polymerization rate at the initial level. For example, 40% or less, preferably 5-30%, of the boron hydrocarbyl compound is supplied at the start of the polymerization and the remainder is supplied in a later stage, in a continuous fashion or stepwise.

The catalyst composition of the invented process is preferably based, as an additional component, on a ligand which forms a complex with the Group VIII metal. It would appear that the presence of two complexing sites in one ligand molecule significantly contributes to the activity of the catalysts. It is thus preferred to use a ligand containing at least two dentate groups which can complex with the Group VIII metal. Although less preferred, it is also possible to employ a monodentate ligand, i.e. a compound which contains a single dentate group which can complex with the Group VIII metal. Suitably a bidentate ligand is used which contains two phosphorus-, nitrogen- or sulphur containing dentate groups. It is also possible to use a bidentate mixed ligand such as 1-diphenylphosphino-3-ethylthiopropane.

A preferred group of bidentate ligands can be indicated by the general formula

$$R^1R^2M^1\text{-}R\text{-}M^2R^3R^4 \qquad (I)$$

In this formula $M^1$ and $M^2$ independently represent a phosphorus, arsenic or antimony atom, $R^1$, $R^2$, $R^3$ and $R^4$ independently represent a non-substituted or polar substituted hydrocarbyl group, in particular of up to 10 carbon atoms, and R represents a bivalent organic bridging group containing at least 2 carbon atoms in the bridge.

In the ligands of formula (I) $M^1$ and $M^2$ preferably represent phosphorus atoms. $R^1$, $R^2$, $R^3$ and $R^4$ may independently represent optionally polar substituted alkyl, aryl, alkaryl, aralkyl or cycloalkyl groups. Preferably at least one of $R^1$, $R^2$, $R^3$ and $R^4$ represents an aromatic group, in particular an aromatic group which is polar substituted.

Suitable polar groups include halogen atoms, such as fluorine and chlorine, alkoxy groups such as methoxy and ethoxy groups and alkylamino groups such as methylamino-, dimethylamino- and diethylamino groups. Alkoxy groups and alkylamino groups contain in particular up to 5 carbon atoms in each of their alkyl groups.

It is preferred that one or more, in particular each of $R^1$, $R^2$, $R^3$ and $R^4$ represents an aryl group, preferably a phenyl group, substituted at an ortho position with respect to $M^1$ or $M^2$ with an alkoxy group, especially a methoxy group. This provides advantageously an improvement in maintaining the polymerization rate at the initial level.

In the ligands of formula (I), R preferably represents a bivalent organic bridging group containing from 2 to 4 bridging atoms, at least two of which are carbon atoms. Examples of such groups R are $-CH_2\text{-}CH_2\text{-}$, $-CH_2\text{-}CH_2\text{-}CH_2\text{-}$, and $-CH_2\text{-}CH_2\text{-}CH_2\text{-}CH_2\text{-}$. Preferably R is a trimethylene group.

Preferred ligands are 1,3-bis[bis(2,4-dimethoxyphenyl)phosphino]propane, 1,3-bis[bis(2,4,6-trimethoxyphenyl)phosphino]propane and, more preferred, 1,3-bis[bis(2-methoxyphenyl)phosphino]propane.

Other suitable bidentate ligands are nitrogen containing compounds of the general formula

$$\begin{array}{ccc} X^1 & & X^2 \\ / \ \backslash & & / \ \backslash & \qquad (II) \\ N = C & - & C = N \end{array}$$

wherein $X^1$ and $X^2$ independently represent organic bridging groups each containing 3 or 4 atoms in the bridge at least 2 of which are carbon atoms. There may be an additional bridging group connecting the bridging groups $X^1$ and $X^2$. Examples of such compounds are 2,2'-bipyridine, 4,4'-dimethyl-2,2'-bipyridine, 4,4'-dimethoxy-2,2'-bipyridine, 1,10-phenanthroline, 4,7-diphenyl-1,10-phenanthroline and 4,7-dimethyl-1,10-phenanthroline. Preferred compounds are 2,2'-bipyridine and 1,10-phenanthroline.

Again other suitable bidentate ligands are sulphur containing compounds of the general formula

$$R^5S\text{-}Q\text{-}SR^6 \qquad (III)$$

wherein $R^5$ and $R^6$ independently represent a non-substituted or polar substituted hydrocarbyl group and Q represents a bivalent bridging group containing 2 to 4 carbon atoms in the bridge. The groups $R^5$ and $R^6$ are preferably alkyl groups, each having in particular up to 10 carbon atoms. Very suitable bis thio compounds are 1,2-bis (ethylthio) ethane and 1,2-bis (propylthio) ethene.

It is preferred to use as a monodentate ligand a compound of the general formula

$$R^7 R^8 R^9 M^3 \qquad (IV)$$

wherein $M^3$ represents a phosphorus, arsenic or antimony atom, each of $R^7$, $R^8$ and $R^9$ independently represents a non-substituted or polar substituted hydrocarbyl group, in particular having up to 11 carbon atoms, such as n-alkyl groups and aryl groups, in particular phenyl groups. Eligible substituents are alkoxy groups, such as methoxy and ethoxy groups. Preferred monodentate ligands are tris (o-tolyl)phosphine, tris (2-methoxyphenyl)-phosphine, trinaphthylphosphine and tris(n-butyl)-phosphine.

The amount of bidentate ligand supplied may vary considerably, but is usually dependent on the amount of metal of Group VIII, present in the catalyst composition. Preferred amounts of bidentate ligands are in the range of 0.5 to 8, preferably in the range of 0.5 to 2 moles per gram atom of metal of Group VIII, unless the bidentate ligand is a nitrogen bidentate ligand, in which case the bidentate ligand is preferably present in an amount of from 0.5-200 and in particular 1-50 moles per gram atom of metal of Group VIII. The monodentate ligands are preferably present in an amount of from 0.5-50 and in particular 1-25 moles per gram atom of metal of Group VIII.

The performance of the catalyst composition may be improved by incorporating therein an organic oxidant promoter, such as a quinone. Preferred promoters are selected from the group consisting of benzoquinone, naphthoquinone and anthraquinone. The amount of promoter is advantageously in the range of 1-50, preferably in the range of 1 to 10 mole per gram atom of metal of Group VIII.

The amount of catalyst used in the process of the invention may vary between wide limits. Recommended quantities of catalyst composition are in the range of $10^{-8}$ to $10^{-2}$, calculated as gram atoms of metal of Group VIII per mole of olefinically unsaturated compound to be copolymerized with carbon monoxide. Preferred quantities are in the range of $10^{-7}$ to $10^{-3}$ on the same basis.

It is advantageous to carry out the copolymerization process in the presence of a protic compound. An advantage of using a protic compound resides in better maintaining the polymerization rate at the initial level. Examples of protic compounds are acids (such as sulphonic acids, carboxylic acids and adducts of boric acid and glycols or salicylic acids), alcohols and water. They have typically 15 or fewer carbon atoms, if any. Preferred acids are those having a pKa of less than 6, more preferably less than 4 and in particular less than 2, when measured in aqueous solution at 18 °C. Preferred protic compounds are alcohols, such as primary, secondary and tertiary aliphatic alcohols and phenols. They may be mono-alcohols or polyols, such as glycols. Preferred alcohols are the lower alcohols, normally understood to be the mono-alcohols which are completely miscible with water, in particular methanol and ethanol. The quantity of the protic compound employed may vary between wide ranges. Eligible quantities of acid are in the range of 0.5-200, in particular in the range of 1.0 to 50, more in particular in the range of 1.0-10 equivalents per gram atom of Group VIII metal. When the protic compound is an alcohol, in particular a lower alcohol, it may function in the copolymerization as a liquid diluent or it may be incorporated therein, for example in a quantity up to 50% by volume, in particular 5-30% by volume, relative to the total volume of the diluent.

Olefinically unsaturated compounds which can be used as monomers in the copolymerization process of the invention, include compounds consisting exclusively of carbon and hydrogen and compounds which in addition comprise hetero atoms, such as unsaturated esters. Unsaturated hydrocarbons are preferred. Examples of suitable monomers are lower olefins, i.e. olefins containing from 2 to 6 carbon atoms, such as ethene, propene and butene-1, cyclic olefins such as cyclopentene, aromatic compounds such as styrene and α-methylstyrene, and vinyl esters such as vinyl acetate and vinyl propionate. Preference is given to ethene and mixtures of ethene with another α-olefin, such as propene or butene-1.

When carbon monoxide is copolymerized with ethene and another olefinically unsaturated compound there is an additional advantage of adding hydrogen to the copolymerization mixture, in accordance with this invention. The additional advantage resides in a more efficient incorporation of the other olefinically unsaturated compound, so that copolymers are obtained in which the molar ratio of the other olefinically unsaturated compound to ethene is increased.

Generally, the molar ratio of on the one hand carbon monoxide and on the other hand the olefinically unsaturated compound(s) is selected in the range of 1: 5 to 5:1. Preferably the molar ratio is in the range of 1: 1.5 to 1.5:1, substantially equimolar ratios being preferred most.

The copolymerization process of this invention is typically carried out in the presence of a liquid diluent. Preferably a diluent is used in which the copolymer to be prepared forms a suspension, in which case a diluent may be selected in which the copolymer is insoluble or virtually insoluble. Examples of liquid diluents are ketones (e.g. acetone), chlorinated hydrocarbons (e.g. chloroform or dichloromethane), aromatics (e.g. toluene, benzene, chlorobenzene) and protic diluents, such as the lower alcohols (e.g. methanol and ethanol). Mixtures of liquid diluents may be used as well, for example protic diluents may comprise aprotic compounds. Particularly preferred are aromatic diluents and protic diluents because these provide an improvement in maintaining the polymerization rate at the initial level. The process of this invention may also be carried out as a gas phase polymerization process.

When the process of this invention is carried out such that the prepared copolymer is formed as a suspension in a liquid diluent it is advantageous to have a solid particulate material suspended in the diluent before the monomers are contacted with the catalyst composition. This embodiment of the process is advantageous because it provides an improvement in maintaining the polymerization rate at the initial level. In this embodiment the catalyst is preferably used as a solution in the diluent. Alternatively it may be advantageous that a catalyst is used which is deposited on the solid particulate material or, otherwise, which is chemically bound to the solid particulate material. Catalysts of the latter type are known in the art, for example from EP-A-511713, EP-A-404228 and EP-A-619334. Such deposited or chemically bound catalysts may also advantageously be used when the polymerization is carried out as a gas phase process.

Typically a copolymer of carbon monoxide and an olefinically unsaturated compound is used as the solid particulate material, in particular a copolymer which is based on the same monomers as the copolymer to be prepared. The latter means that, for example, when a linear alternating copolymer of carbon monoxide and ethene will be prepared a linear alternating copolymer of carbon monoxide and ethene from an earlier polymer preparation will be suspended in the diluent. Other suitable solid particulate materials may be inorganic or organic materials, such as silica, alumina, talc, soot and polymers, for example polyethene, polypropene and polystyrene.

The solid particulate material is suitably used in a quantity of 0.1-20 %w, relative to the weight of the diluent, more suitably in a quantity of 0.5-10 %w. The bulk density of the solid particulate material is typically in the range of 50-1000 $kg/m^3$, in particular in the range of 100-500 $kg/m^3$. The solid particulate material has typically an average particle size of $10^{-6}$-$10^{-3}$ m, in particular $10^{-6}$-$5 \times 10^{-4}$ m. The average particle size is determined as follows. With the aid of a commercially available particle size analyser, a cumulative weight distribution of a representative sample of the solid particulate material is determined as a function of the particle size. The cumulative weight distribution function is converted into a cumulative surface area distribution function, as described by Terence Allen in Particle Size Measurement (Chapman and Hall, London, 1981), p. 122 ff. The average particle size is found as the median of the cumulative surface area distribution function.

According to this invention the copolymerization process is carried out in the presence of hydrogen having a pressure of at least 0.01 MPa (0.1 bar). Suitably the hydrogen pressure is in the range of 0.05-5.0 MPa (0.5-50 bar), more suitably 0.1-3.0 MPa (1-30 bar). A suitable partial pressure ratio of hydrogen to carbon monoxide is in the range of 1:10-2:1, in particular 1:5-1:1.

When the process of this invention is carried out in the presence of a liquid diluent it is typically carried out with application of a stirring power applied to the polymerization mixture of at least 0.25 $kW/m^3$, in particular at least 0.5 $kW/m^3$. When the stirring power applied is less than 0.25 $kW/m^3$ there is a depletion of monomer, in particular of carbon monoxide, in the liquid phase which may cause a decay of the rate of copolymerization. A stirring power of at least 0.25 $kW/m^3$ improves this situation. When a diluent is used in which the copolymer to be prepared forms a suspension it is recommended to apply a stirring power of at least 0.5 $kW/m^3$, in particular at least 1.0 $kW/m^3$. A practicable maximum of the power density is 20 $kW/m^3$. A preferred range of the power density is from 1.5 to 15 $kW/m^3$. The stirring power may be transmitted to the polymerization mixture by any suitable means, for example, a stirring device, a jet mixer or a gas stream.

The copolymerization process is usually carried out at a temperature in the range of 20 to 200 °C, preferably at a temperature in the range of 30 to 150 °C. The reaction is conveniently performed at a pressure in the range of 0.2 to 20.0 MPa (2 to 200 bar), pressures in the range of 2.0 to 10.0 MPa (20 to 100 bar) being preferred. The process is typically carried out at a scale at which the quantity of liquid diluent, if present, exceeds 10 kg. In particular when the stability of the polymerization rate is improved, by using one or more of the measures indicated hereinbefore, it is advantageous to apply residence times exceeding 1 hour, in particular exceeding 1.5 hours and most in particular exceeding 3.5 hours. The process may be carried out as a batch process or as a continuous process. In the latter case it is advantageous to apply two or more reactors connected in series, because this increases the quantity of polymer which can be prepared within a given period of time using a certain reaction volume and a certain quantity of catalyst.

The copolymers obtained according to the invention are suitable as thermoplastics for fibres, films or sheets, or for injection moulding, compression moulding and blowing applications. They may be used for applications in the car industry, for the manufacture of packaging materials for food and drinks and for various uses in the domestic sphere.

The invention will be illustrated by the following examples. The diluents were analytical grade chemicals, which were used as purchased.

EXAMPLE 1 (for comparison)

A copolymer of carbon monoxide with ethene and propene was prepared as follows.

Tris(perfluorophenyl)borane (0.247 g, 0.48 mmoles) was weighed in air into a dried Schlenk tube and dissolved in 100 ml dichloromethane. The solution was transferred to a 300 ml autoclave equipped with baffles and an inclined blade stirrer. Subsequently 25 g propene was added. The autoclave was pressurised to 4.0 MPa (40 bar) with premixed carbon monoxide and ethene (1:1 molar ratio). The stirring power applied was about 3 kW/m$^3$. The autoclave was heated to 70 °C. $L_2Pd(CH_3CO_2)_2$ (0.0154 g, 0.025 mmoles), wherein $L_2$ denotes 1,3-bis(diphenylphosphino)propane, taken up in 10 ml dichloromethane was injected into the autoclave. The pressure was maintained by supplying additional carbon monoxide/ethene mixture. After 1 hour the pressure was released and the autoclave was allowed to cool to room temperature.

The polymer product was recovered by filtration, washed with dichloromethane and dried.

$^{13}$C-NMR analysis of the copolymer, in hexafluoroisopropanol as solvent, showed that the quantity of pentafluorophenyl end groups was 20 mole-%, relative to the total of end groups. The molar ratio of monomer units originating in propene to those originating in ethene was 0.15:1.

EXAMPLE 2

A copolymer of carbon monoxide with ethene and propene was prepared following the procedures outlined in Example 1, with the difference that the autoclave was pressurised to 4.0 MPa (40 bar) with the carbon monoxide/ethene mixture and subsequently to 5.0 MPa (50 bar) with hydrogen. The pressure was maintained by supplying additional carbon monoxide/ethene mixture.

The quantity of pentafluorophenyl end groups in the copolymer was 12.5 mole-%, relative to the total of end groups. The molar ratio of monomer units originating in propene to those originating in ethene was 0.20:1.

**Claims**

1. A process for the copolymerization of carbon monoxide with an olefinically unsaturated compound comprising contacting the monomers in the presence of hydrogen having a pressure of at least 0.01 MPa with a catalyst composition which is based on a source of a Group VIII metal and a boron hydrocarbyl compound.

2. A process as claimed in claim 1, characterized in that the Group VIII metal is palladium and that the boron hydrocarbyl compound is a hydrocarbylborane of the general formula BXYZ wherein X, Y and Z denote independently substituted or unsubstituted hydrocarbyl groups, preferably aryl groups.

3. A process as claimed in claim 1 or 2, characterized in that the boron hydrocarbyl compound is used in a quantity such that the molar ratio of boron to the Group VIII metal is less than 25, in particular in the range of 0.1-20.

4. A process as claimed in any of claims 1-3, characterized in that as an additional catalyst component use is made of a bidentate ligand of the general formula

$$R^1R^2M^1\text{-}R\text{-}M^2R^3R^4 \qquad (I)$$

wherein $M^1$ and $M^2$ independently represent a phosphorus, arsenic or antimony atom, $R^1$, $R^2$, $R^3$ and $R^4$ independently represent a non-substituted or polar substituted hydrocarbyl group, in particular of up to 10 carbon atoms, on the understanding that one or more of $R^1$, $R^2$, $R^3$ and $R^4$ represents an aryl group, preferably a phenyl group, substituted at an ortho position with respect to $M^1$ or $M^2$ with an alkoxy group, especially a methoxy group, and R represents a bivalent organic bridging group containing at least 2 carbon atoms in the bridge.

5. A process as claimed in any of claims 1-4, characterized in that the liquid diluent is an aromatic diluent or a protic diluent.

6. A process as claimed in any of claims 1-5, characterized in that the olefinically unsaturated compound is ethene or, more preferred, a mixture of ethene with another olefinically unsaturated compound, such as an α-olefin, for example propene or butene-1.

7. A process as claimed in any of claims 1-6, characterized in that the molar ratio of carbon monoxide and the olefinically unsaturated compound(s) is in the range of 1:5 to 5:1, preferably 1:1.5 to 1.5:1, the quantity of catalyst composition is in the range of $10^{-8}$ to $10^{-2}$, calculated as gram atoms of metal of Group VIII per mole of olefinically unsaturated compound to be copolymerized, preferably in the range of $10^{-7}$ to $10^{-3}$ on the same basis, a temperature is selected in the range of 20 and 200 °C, preferably in the range of 30 and 150 °C, and a pressure is selected in the range of 0.2 to 20.0 MPa, preferably in the range of 2.0 to 10.0 MPa.

8. A process as claimed in any of claims 1-7, characterized in that the hydrogen pressure is in the range of 0.05-5.0 MPa, suitably 0.1-3.0 MPa.

9. A process as claimed in any of claims 1-8, characterized in that a diluent is present in which the copolymer to be prepared forms a suspension and that the stirring power applied to the polymerization mixture is at least 0.5 kW/m$^3$, in particular at least 1.0 kW/m$^3$, preferably in the range of from 1.5 to 15 kW/m$^3$. 10. A process as claimed in claim 9, characterized in that a solid particulate material is suspended in the liquid diluent before the monomers are contacted with the catalyst composition, a preferred solid particulate material being a copolymer of carbon monoxide and an olefinically unsaturated compound, in particular a copolymer which is based on the same monomers as the copolymer to be prepared.

## Patentansprüche

1. Verfahren zur Copolymerisation von Kohlenmonoxid mit einer olefinisch ungesättigten Verbindung, das ein Inkontaktbringen der Monomere in Gegenwart von Wasserstoff mit einem Druck von wenigstens 0,01 MPa mit einer Katalysatorzusammensetzung umfaßt, die auf einer Quelle eines Gruppe VIII-Metalles und einer Borhydrocarbylverbindung beruht.

2. Verfahren nach Anspruch 1, dadurch gekennzeichnet, daß das Gruppe VIII-Metall Palladium ist und daß die Borhydrocarbylverbindung ein Hydrocarbylboran mit der allgemeinen Formel BXYZ ist, worin X, Y und Z unabhängig voneinander für substituierte oder unsubstituierte Hydrocarbylgruppen, vorzugsweise für Arylgruppen, stehen.

3. Verfahren nach Anspruch 1 oder 2, dadurch gekennzeichnet, daß die Borhydrocarbylgruppe in einer solchen Menge verwendet wird, daß das Molverhältnis von Bor zum Gruppe VIII-Metall kleiner als 25 ist, insbesondere im Bereich von 0,1 bis 20 liegt.

4. Verfahren nach einem der Ansprüche 1 bis 3, dadurch gekennzeichnet, daß als weitere Katalysatorkomponente von einem Bidentatliganden mit der allgemeinen Formel

$$R^1R^2M^1\text{-}R\text{-}M^2R^3R^4 \qquad (I)$$

Gebrauch gemacht wird, worin M$^1$ und M$^2$, unabhängig voneinander, ein Phosphor-, Arsen- oder Antimonatom darstellen, R$^1$, R$^2$, R$^3$ und R$^4$ unabhängig voneinander eine unsubstituierte oder polar substituierte Hydrocarbylgruppe darstellen, insbesondere mit bis zu 10 Kohlenstoffatomen, mit der Maßgabe, daß eine oder mehrere der Gruppen R$^1$, R$^2$, R$^3$ und R$^4$ eine Arylgruppe darstellen, vorzugs-

weise eine Phenylgruppe, die an einer ortho-Position hinsichtlich M$^1$ oder M$^2$ durch eine Alkoxygruppe, insbesondere eine Methoxygruppe, substituiert ist, und R eine zweiwertige organische Brückengruppe bezeichnet, die wenigstens 2 Kohlenstoffatome in der Brücke enthält.

5. Verfahren nach einem der Ansprüche 1 bis 4, dadurch gekennzeichnet, daß das flüssige Verdünnungsmittel ein aromatisches Verdünnungsmittel oder ein protisches Verdünnungsmittel ist.

6. Verfahren nach einem der Ansprüche 1 bis 5, dadurch gekennzeichnet, daß die olefinisch ungesättigte Verbindung Ethen ist oder, stärker bevorzugt, ein Gemisch aus Ethen mit einer anderen olefinisch ungesättigten Verbindung ist, wie einem α-Olefin, beispielsweise Propen oder Buten-1.

7. Verfahren nach einem der Ansprüche 1 bis 6, daß das Molverhältnis von Kohlenmonoxid zur olefinisch ungesättigten Verbindung bzw. zu den olefinisch ungesättigten Verbindungen im Bereich von 1:5 bis 5:1, vorzugsweise 1:1,5 bis 1,5:1 liegt, die Menge der Katalysatorzusammensetzung im Bereich von 10$^{-8}$ bis 10$^{-2}$, berechnet als Grammatom Gruppe VIII-Metall pro Mol olefinisch ungesättigter, zu copolymerisierender Verbindung liegt, vorzugsweise im Bereich von 10$^{-7}$ bis 10$^{-3}$, auf die gleiche Basis bezogen, eine Temperatur im Bereich von 20 bis 200°C, vorzugsweise im Bereich von 30 bis 150°C ausgewählt wird und ein Druck im Bereich von 0,2 bis 20,0 MPa, vorzugsweise im Bereich von 2,0 bis 10,0 MPa ausgewählt wird.

8. Verfahren nach einem der Ansprüche 1 bis 7, dadurch gekennzeichnet, daß der Wasserstoffdruck im Bereich von 0,05 bis 5,0 MPa, zweckmäßig 0,1 bis 3,0 MPa liegt.

9. Verfahren nach einem der Ansprüche 1 bis 8, dadurch gekennzeichnet, daß ein Verdünnungsmittel vorliegt, worin das herzustellende Copolymer eine Suspension ausbildet und daß die auf das Polymerisationsgemisch angelegte Rührleistung wenigstens 0,5 kW/m$^3$, insbesondere wenigstens 1,0 kW/m$^3$, vorzugsweise im Bereich von 1,5 bis 15 kW/m$^3$ beträgt.

10. Verfahren nach Anspruch 9, dadurch gekennzeichnet, daß ein festes teilchenförmiges Material in dem flüssigen Verdünnungsmittel suspendiert wird, bevor die Monomere mit der Katalysatorzusammensetzung in Kontakt gebracht werden, wobei ein bevorzugtes festes teilchenförmiges Material ein Copolymer aus Kohlenmonoxid und einer olefinisch ungesättigten Verbindung ist, insbesondere ein Copolymer, das auf den gleichen Monomeren wie das herzustellende Copolymer beruht.

**Revendications**

1. Procédé pour la copolymérisation de monoxyde de carbone avec un composé oléfiniquement insaturé comprenant la mise en contact des monomères en présence d'hydrogène ayant une pression d'au moins 0,01 MPa avec une composition de catalyseur qui est à base d'une source d'un métal du Groupe VIII et d'un composé hydrocarbylé de bore.

2. Procédé suivant la revendication 1, caractérisé en ce que le métal du Groupe VIII est le palladium et en ce que le composé hydrocarbylé de bore est un hydrocarbylborane de la formule générale BXYZ, dans laquelle X, Y et Z représentent indépendamment des groupes hydrocarbyle substitués ou non substitués, avantageusement des groupes aryle.

3. Procédé suivant l'une ou l'autre des revendications 1 et 2, caractérisé en ce que le composé hydrocarbylé de bore est utilisé en une quantité telle que le rapport molaire du bore au métal du Groupe VIII est inférieur à 25, en particulier dans la gamme de 0,1-20.

4. Procédé suivant l'une quelconque des revendications 1 à 3, caractérisé en ce que comme composant de catalyseur additionnel on utilise un ligand bidenté de la formule générale :

$$R^1R^2M^1\text{-}R\text{-}M^2R^3R^4 \qquad (I)$$

dans laquelle $M^1$ et $M^2$ représentent indépendamment un atome de phosphore, d'arsenic ou d'antimoine, $R^1$, $R^2$, $R^3$ et $R^4$ représentent indépendamment un groupe hydrocarbyle non substitué ou substitué polaire, en particulier de jusqu'à 10 atomes de carbone, à la condition qu'un ou plusieurs des $R^1$, $R^2$, $R^3$ et $R^4$ représentent un groupe aryle, avantageusement un groupe phényle, substitué en position ortho par rapport à $M^1$ ou $M^2$ avec un groupe alcoxy, en particulier un groupe méthoxy, et R représente un groupe de pontage organique bivalent contenant au moins deux atomes de carbone dans le pont.

5. Procédé suivant l'une quelconque des revendications 1 à 4, caractérisé en ce que le diluant liquide est un diluant aromatique ou un diluant protique.

6. Procédé suivant l'une quelconque des revendications 1 à 5, caractérisé en ce que le composé oléfiniquement insaturé est l'éthène ou, plus avantageusement, un mélange d'éthène avec un autre composé oléfiniquement insaturé, tel qu'une α-oléfine, par exemple le propène ou le butène-1.

7. Procédé suivant l'une quelconque des revendications 1 à 6, caractérisé en ce que le rapport molaire du monoxyde de carbone et du ou des composés oléfiniquement insaturés se situe dans la gamme de 1/5 à 5/1, avantageusement de 1/1,5 à 1,5/1, la quantité de composition de catalyseur se situe dans la gamme de $10^{-8}$ à $10^{-2}$, calculée en atomes-grammes de métal du Groupe VIII par mole de composé oléfiniquement insaturé à copolymériser, avantageusement dans la gamme de $10^{-7}$ à $10^{-3}$ sur la même base, une température est choisie dans l'intervalle de 20 à 200°C, avantageusement dans l'intervalle de 30 et 150°C, et une pression est choisie dans la gamme de 0,2 à 20,0 MPa, avantageusement dans la gamme de 2,0 à 10,0 MPa.

8. Procédé suivant l'une quelconque des revendications 1 à 7, caractérisé en ce que la pression d'hydrogène se situe dans la gamme de 0,05-5,0 MPa, d'une façon appropriée de 0,1-3,0 MPa.

9. Procédé suivant l'une quelconque des revendications 1 à 8, caractérisé en ce qu'un diluant est présent dans lequel le copolymère à préparer forme une suspension et en ce que la puissance d'agitation appliquée au mélange de polymérisation est d'au moins 0,5 kW/m$^3$, en particulier d'au moins 1,0 kW/m$^3$, avantageusement dans la gamme de 1,5 à 15 kW/m$^3$.

10. Procédé suivant la revendication 9, caractérisé en ce qu'une matière particulaire solide est en suspension dans le diluant liquide avant la mise en contact des monomères avec la composition de catalyseur, une matière particulaire solide avantageuse étant un copolymère de monoxyde de carbone et d'un composé oléfiniquement insaturé, en particulier un copolymère qui est à base des mêmes monomères que le copolymère à préparer.